Europäisches Patentamt

European Patent Office

Office européen des brevets

(11) Veröffentlichungsnummer: **0 472 917 A1**

# (12) EUROPÄISCHE PATENTANMELDUNG

(21) Anmeldenummer: **91112553.2**

(22) Anmeldetag: **26.07.91**

(51) Int. Cl.5: **B23B 31/02**, B23B 29/12

(30) Priorität: **31.08.90 DE 9012522 U**

(43) Veröffentlichungstag der Anmeldung:
**04.03.92 Patentblatt 92/10**

(84) Benannte Vertragsstaaten:
**AT CH ES FR GB IT LI SE**

(71) Anmelder: **Ott Maschinentechnik GmbH**
**Jägerstrasse 4-12**
**W-8960 Kempten(DE)**

(72) Erfinder: **Heel, Helmut**
**Andreas-Mayer-Strasse 82 1/8**
**W-8951 Lengenwang(DE)**
Erfinder: **Kettel, Hans**
**Steinbruchweg 5**
**W-8960 Kempten(DE)**

(74) Vertreter: **Liebau, Gerhard, Dipl.-Ing.**
**Birkenstrasse 39 Postfach 22 02 29**
**W-8900 Augsburg 22(DE)**

(54) **Werkzeughalter mit modularem Aufbau für angetriebene Werkzeuge zur Verwendung an Drehmaschinen.**

(57) Der Werkzeughalter mit modularem Aufbau für angetriebene Werkzeuge zur Verwendung an Drehmaschinen besteht zumindest aus einem Grundhalter (1) und verschiedenen, wechselweise mit diesem verbindbaren Werkzeugköpfen (2). Der Grundhalter weist einen Einspannschaft (10), einen daran anschließenden Anbauflansch (13), sowie eine in ihm drehbar gelagerte Antriebswelle (14) auf. Jeder Werkzeugkopf (2) weist in einem Gehäuse (27) mindestens eine drehbare Werkzeugaufnahme (31) und eine mit dieser verbundene, antreibbare Welle (28) auf. An den jeweils einander zugekehrten Enden der Antriebswelle (14) und der angetriebenen Welle sind drehfest miteinander kuppelbare Kupplungsteile (18, 29) vorgesehen. Die angetriebene Welle (28) ist eingangsseitig mit einem über das zugehörige Kupplungsteil (29) frei hinausragenden Stützzapfen (20) versehen. Die Antriebswelle (14) ist im Bereich des Anbauflansches (13) mit einer koaxialen Stützbohrung (19) versehen, in welche der Stützzapfen (20) des Werkzeugkopfes (2) passend einsteckbar ist.

FIG.1

Die Erfindung betrifft einen Werkzeughalter mit modularem Aufbau für angetriebene Werkzeuge zur Verwendung an Drehmaschinen, mit einem Grundhalter, der einen in eine Aufnahme der Drehmaschine einsetzbaren Einspannschaft od. dgl., einen daran koaxial anschließenden Anbauflansch, sowie eine in diesem und dem Einspannschaft drehbar gelagerte Antriebswelle aufweist, mit mehreren verschiedenen, wechselweise mit dem Anbauflansch unmittelbar oder gegebenenfalls unter Zwischenschaltung mindestens eines Zwischenteiles, verbindbaren Werkzeugköpfen, von denen jeder in einem Gehäuse mindestens eine drehbare Werkzeugaufnahme und eine mit dieser in Antriebsverbindung stehende, im Gehäuse drehbar gelagerte, antreibbare Welle aufweist, und mit den jeweils einander zugekehrten Enden der Antriebswelle und der angetriebenen Welle vorgesehenen, durch axiales Ineinanderstecken drehfest miteinander kuppelbaren Kupplungsteilen, wobei in einem Gehäuse des Zwischenteiles eine ein- oder zweiteilige Zwischenwelle drehbar gelagert ist, die eingangs- und ausgangsseitig mit den vorgenannten Kupplungsteilen kuppelbare Kupplungsteile aufweist.

Moderne Drehmaschinen weisen einen Werkzeugrevolver oder eine ähnliche Aufnahmeeinrichtung zur gleichzeitigen Aufnahme einer größeren Anzahl von Werkzeugen auf. Diese Werkzeuge werden nacheinander durch Weiterschalten des Werkzeugrevolvers in Arbeitsstellung gebracht, so daß ein Werkstück ohne Werkzeugwechsel nacheinander durch die unterschiedlichsten Werkzeuge bearbeitet werden kann. Um eine Fertigbearbeitung des Werkstückes möglichst in einer einzigen Aufspannung auch in der Drehmaschine durchführen zu können, sind in die Aufnahme des Werkzeugrevolvers auch Werkzeughalter einsetzbar, die angetriebene Werkzeuge, wie Bohr-, Fräs- oder Gewindeschneidwerkzeuge aufnehmen können. Der Antrieb dieser im Werkzeughalter einzuspannenden angetriebenen Werkzeuge erfolgt über eine im Grundhalter drehbar gelagerte Antriebswelle, deren aus dem Einspannschaft des Grundhalters herausragendes, eingangsseitiges Ende mit einem im Werkzeugrevolver vorgesehenen Drehantrieb kuppelbar ist. Da die Aufnahmen für die Werkzeughalter in den Werkzeugrevolvern die unterschiedlichsten Ausgestaltungen aufweisen, müssen auch die Einspannschäfte der Werkzeughalter an die Aufnahme des jeweiligen Werkzeugrevolvers angepaßt sein. Die Werkzeughalter selbst sind je nach der Bearbeitungsaufgabe in unterschiedlichster Weise ausgestaltet. Es gibt beispielsweise Werkzeughalter, bei denen die angetriebenen Werkzeuge koaxial oder achsparallel oder radial zur Achse des Einspannschaftes angeordnet sind. Desweiteren muß für bestimmte Bearbeitungsaufgaben auch zwischen der Antriebswelle des Einspannschaftes und dem Werkzeug ein Getriebe vorgesehen sein, mit welchem die Drehgeschwindigkeit des Antriebsschaftes ins Schnelle übersetzt oder ins Langsame untersetzt wird.

Wegen dieser Vielzahl von unterschiedlichen Aufnahmen und unterschiedlich ausgestalteten Werkzeughaltern sind Werkzeughalter mit modularem Aufbau bekannt (Prospekt der Firma WTO WERKZEUG-EINRICHTUNGEN GmbH, D-7600 Offenburg, "WTO-Präzisions-Werkzeugeinrichtungen"), bei denen der Anwender dieser Werkzeuge einen Werkzeughalter entsprechend der jeweiligen Bearbeitungsaufgabe aus einzelnen Modulen zusammensetzen kann. Solche Module sind Grundhalter mit unterschiedlich ausgestalteten Einspannschäften, an welchen Werkzeugköpfe für Bohr- und Fräswerkzeuge, Werkzeugköpfe mit Gewindeschneideinrichtungen, Winkel-, Bohr- und -fräseinrichtungen, Werkzeugköpfe mit mehreren Spindeln, Exzenterdrehköpfe und dgl. befestigbar sind. Zwischen dem jeweiligen Grundhalter und dem jeweiligen Werkzeugkopf kann außerdem auch noch ein, ein Getriebe enthaltendes, Zwischenteil eingesetzt werden. Hierbei gibt es wiederum Zwischenteile mit Übersetzungs- und solche mit Untersetzungsgetrieben sowie Zwischenteile mit sogenanntem Versatz-Gebtriebe, bei welchen der Werkzeugkkopf gegenüber der Achse des Einspannschaftes radial versetzt montierbar ist. Die Anzahl der vielfältigen Module, aus denen sich der Anwender einen der jeweiligen Bearbeitungsaufgabe angepaßten Werkzeughalter selbst zusammenbauen kann, ist hiermit nicht vollständig angegeben.

Die im Werkzeugkopf vorgesehene antreibbare Welle und auch die Zwischenwelle im Zwischenteil müssen in der Regel mindestens zweifach gelagert sein. Um hierbei eine möglichst gute und steife Lagerung, insbesondere der antreibbaren Welle im Werkzeugkopf, zu erreichen, die meist auch zur Aufnahme des Werkzeuges dient, müssen die beiden Lager in möglichst großem axialen Abstand voneinander angeordnet sein. Hierdurch vergrößert sich jedoch die axiale Baulänge in Richtung der Achse des Einspannschaftes, so daß ein aus mehreren Modulen zusammengesetzter Werkzeughalter verhältnismäßig weit über den Werkzeugrevolver auskragt. Je größer die Auskragung ist, desto geringer ist die Steifigkeit des jeweiligen Werkzeughalters. Unter einer verringerten Steifigkeit leidet auch die Bearbeitungsgenauigkeit. Außerdem verursacht ein weit auskragender Werkzeughalter auch längere Zustellwege, die die Bearbeitungszeit vergrößern. Schließlich können weit auskragende Werkzeughalter auch leichter mit anderen Maschinenteilen kollidieren.

Der Erfindung liegt daher die Aufgabe zugrunde, einen Werkzeughalter mit modularem Aufbau für angetriebene Werkzeuge zur Verwendung an Drehmaschinen der eingangs erwähnten Art zu schaffen, bei dem zur Erhöhung der Steifingkeit die an den Grundhalter anbaubaren Module in Achsrichtung des Einspannschaftes eine möglichst kleine Baulänge aufweisen und trotzdem eine optimale Abstützung, insbesondere der angetriebenen Welle, aber auch der Zwischenwelle vorhanden ist.

Dies wird nach der Erfindung dadurch erreicht, daß die angetriebene Welle und die Zwischenwelle eingangsseitig an ihren jeweils dem Anbauflansch zugewandten Enden jede mit einem über das zugehörige Kupplungsteil zum jeweils benachbarten Modul hin frei hinausragenden Stützzapfen gleichen Durchmessers versehen sind, und daß die Antriebswelle im Bereich des Anbauflansches und die Zwischenwelle an ihren dem jeweiligen Werkzeugkopf zugewandten Enden jede mit einer koaxialen Stützbohrung versehen sind, in welche der Stützzapfen des jeweils benachbarten Moduls passend einsteckbar ist.

Durch das passende Eingreifen des Stützzapfens in die Stützbohrung der Antriebswelle bzw. der Zwischenwelle wird eine optimale Abstützung der angetriebenen Welle und auch der Zwischenwelle auf verhältnismäßig großer axialer Länge bei gleichzeitiger Verkürzung der axialen Baulänge des Werkzeugkopfes bzw. des Zwischenteiles erreicht. Die optimale Abstützung der angetriebenen Welle des Werkzeugkopfes hat vor allem dann wesentliche Vorteile, wenn die angetriebene Welle gleichzeitig auch die Werkzeugaufnahme für ein Fräs- oder Bohrwerkzeug enthält. Hierbei wirkt nämlich die angetriebene Welle wie eine Fräs- oder Bohrspindel und es ergibt sich durch die zusätzliche Abstützung dieser Welle in der Stützbohrung des benachbarten Moduls eine steifere Lagerung und damit auch eine höhere Bearbeitungsgenauigkeit. Durch die zusätzliche Abstützung der antreibbaren Welle bzw. der Zwischenwelle können die im Werkzeugkopf bzw. Zwischenteil vorgesehenen Lager für diese Wellen auch in geringerem axialen Abstand voneinander angeordnet sein, was zu einer Verkürzung der axialen Baulänge der einzelnen Module und damit des gesamten Werkzeughalters beiträgt. Hierdurch wird die Steifigkeit des aus den Modulen zusammengesetzten Werkzeughalters vergrößert und die mit weiter auskragenden Werkzeughaltern verbundenen weiteren Nachteile werden vermieden.

Vorteilhafte Ausgestaltungen der Erfindung sind in den Unteransprüchen gekennzeichnet.

Die Erfindung ist in folgendem, anhand von mehreren in der Zeichnung dargestellten Ausführungsbeispielen näher erläutert. Es zeigen:

Figur 1    einen Axialschnitt eines aus Grundhalter und Werkzeugkopf zusammengesetzten Werkzeughalters,

Figur 2    einen Axialschnitt eines aus Grundhalter und Winkel-Werkzeugkopf zusammengesetzten Werkzeughalters,

Figur 3 und 4    zusammengesetzte Werkzeughalter mit einem jeweils zwischen dem Grundhalter und dem Werkzeugkopf vorgesehenen Unter- bzw. Übersetzungsgetriebe,

Figur 5    einen zusammengesetzten Werkzeughalter mit einem zwischen Grundhalter und Winkel-Werkzeugkopf angeordneten Versatzgetriebe,

Figur 6    einen zusammengesetzten Werkzeughalter mit einer zwischen Grundhalter und Werkzeugkopf angeordneten Kühlmittelzuführung.

Figur 7    eine Stirnansicht eines zusammengesetzten Werkzeughalters in Richtung VII der Figur 5.

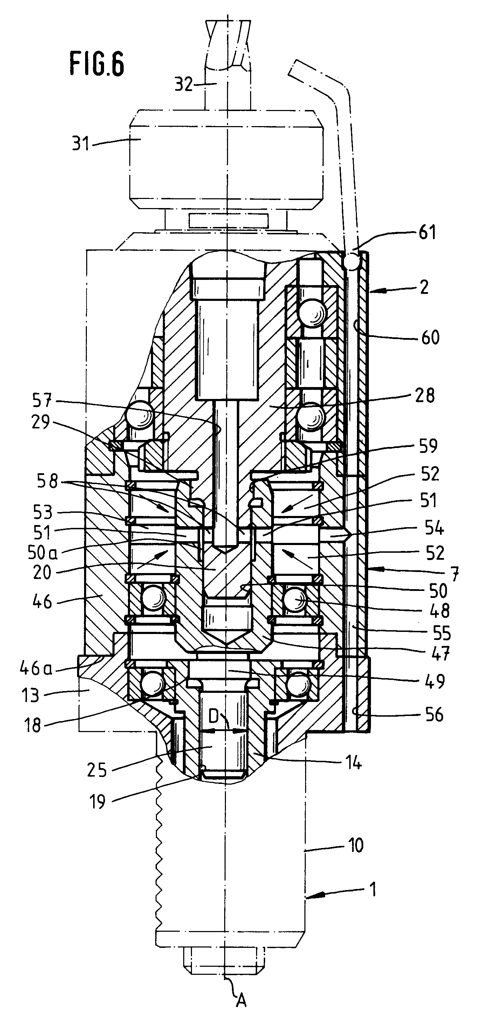

Anhand der Zeichnung soll nicht nur der Aufbau des erfindungsgemäßen Werkzeughalters erläutert werden, sondern auch wie sich aus den verschiedenen Modulen die unterschiedlichsten Werkzeughalter zusammensetzen lassen, wobei jedoch die Variantenvielfalt nicht auf die in der Zeichnung dargestellten Beispiele beschränkt ist. Jeder Werkzeughalter besteht mindestens aus einem Grundhalter 1 und einem Werkzeugkopf 2 oder 3. Zwischen Grundhalter 1 und dem jeweiligen Werkzeugkopf 2, 3 können Zwischenteile 4, 5, 6, die jeweils Getriebe enthalten, und/oder ein Zwischenteil 7 (Figur 6), welches eine Kühlmittelzuführung enthält, eingesetzt werden. Es ist auch die Anordnung von zwei jeweils Getriebe enthaltenden Zwischenteilen zwischen dem Grundhalter 1 und dem Werkzeugkopf 2, 3 möglich, so z.B. des Zwischenteiles 6 mit dem Versatzgetriebe in Kombination mit dem das Untersetzungsgetriebe aufweisenden Zwischenteil 4 oder mit dem das Übersetzungsgetriebe aufweisenden Zwischenteil 5.

Der Grundhalter 1 weist einen Einspannschaft 10 od. dgl. auf, mit welchem er in eine Aufnahme 11 des Werkzeugrevolvers 12 einer Drehmaschine einsetzbar ist. Grundsätzlich ist der Einspannschaft 10 der jeweiligen Aufnahme 11 in Form und Größe angepaßt, wobei hier die verschiedensten, bei Schnittstellen Werkzeug/Werkzeugmaschine üblichen Verbindungen möglich sind. Der Einspannschaft könnte auch als an den Werkzeugrevolver anschraubbares Befestigungsteil ausgebildet sein.

An den Einspannschaft 10 schließt sich koaxial ein Anbauflansch 13 an, der einen Zentrierbund 13a für das am Anbauflansch 13 jeweils zu befestigende Modul, nämlich einen der Werkzeugköpfe 2, 3 oder die Zwischenteile 4 - 7 aufweist. Die axiale Verbindung der einzelnen Module 1 - 7 untereinander kann mittels axial gerichteter, nicht dargestellter Schrauben erfolgen. Innerhalb des Einspannschaftes 10 und des Anbauflansches 13 ist eine Antriebswelle 14 mittels der im Einspannschaft 10 und im Anbauflansch 13 vorgesehenen Lager 15, 16 drehbar gelagert. Die Antriebswelle 14 weist eingangsseitig eine Kerbverzahnung 17 oder dgl. auf, über welche sie mit einem nicht dargestellten Drehantrieb der Drehmaschine kuppelbar ist. Ferner weist die Antriebswelle 14 an ihrem ausgangsseitigen Ende ein Kupplungsteil 18 in Form eines Innen-Polygonprofils auf. An dieses Kupplungsteil 18 schließt sich eine Stützbohrung 19 an, deren Durchmesser dem Durchmesser D eines in die Stützbohrung 19 einsteckbaren Stützzapfens 20, 21, 22, 23, 24, 25 entspricht.

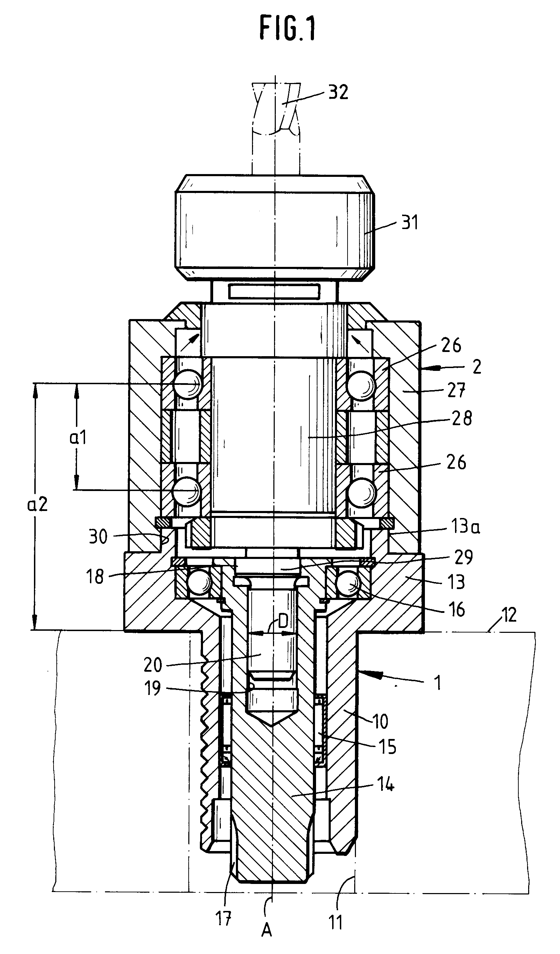

Der Werkzeugkopf 2 weist eine mittels der Lager 26 im Gehäuse 27 drehbar gelagerte, antreibbare Welle 28 auf. Diese antreibbare Welle 28 ist an ihrem, dem Anbauflansch 13 zugekehrten, eingangsseitigen Ende mit einem als Außen-Polygonprofil ausgebildeten Kupplungsteil 29 versehen. An das Kupplungsteil schließt sich der Stützzapfen 20 an, der zum jeweils benachbarten Modul hin, hier dem Grundhalter 1 hin, frei hinausragt. Um den modularen Aufbau der verschiedensten Werkzeughalter zu gewährleisten, weist der Stützzapfen 20 den gleichen Durchmesser auf, wie die Stützzapfen 21 - 25 der übrigen Module 3 - 7. Das Gehäuse 27 ist an seinem, dem Anbauflansch 13 zugekehrten Ende mit einer zum Zentrierbund 13a passenden Zentrierbohrung 30 versehen. Bei dem in Figur 1 dargestellten Werkzeugkopf 2 weist die angetriebene Welle 28 ferner eine Werkzeugaufnahme 31 auf, in welcher ein Werkzeug 32, beispielsweise ein Fräser oder Bohrer, befestigbar ist.

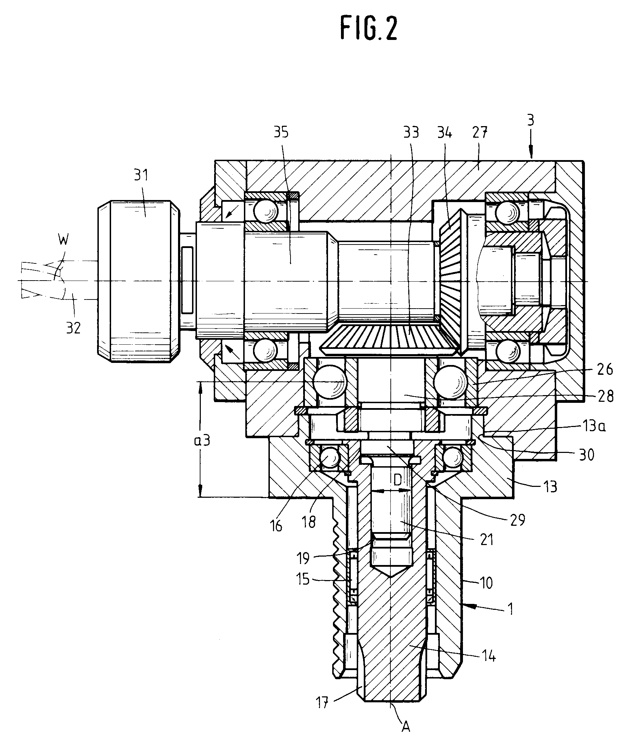

Die angetriebene Welle 28 ist mittels der Lager 26 in einem axialen Abstand a1 radial abgestützt. In zusammengebautem Zustand des Werkzeughalters greift, wie es in Figur 1 dargestellt ist, der Stützzapfen 20 der angetriebenen Welle 28 in die Stützbohrung 19 der Antriebswelle 14 passend ein. Hierdurch erfolgt eine weitere radiale Abstützung der angetriebenen Welle, so daß sich nunmehr ein wesentlich vergrößerter axialer Abstand a2 der beiden äußeren radialen Abstützungen ergibt. Die angetriebene Welle 28 ist damit in größerem axialen Abstand a2 abgestützt und es ergibt sich eine höhere Steifigkeit der Lagerung. Das Drehmoment wird von der Antriebswelle 14 über die ineinandergreifenden Kupplungsteile 18, 29 auf die angetriebene Welle 28 übertragen. Bei dem in Figur 2 dargestellten Winkel-Werkzeugkopf ist die Werkzeugachse W rechtwinklig zur Achse A des Grundhalters 1 angeordnet. Teile gleicher Funktion sind mit Ausnahme des Stützzapfens 21 mit den gleichen Bezugszeichen bezeichnet wie beim vorhergehend beschriebenen Ausführungsbeispiel, so daß obige Beschreibung sinngemäß zutrifft. Obwohl hier für die angetriebene Welle 28 nur ein einziges Lager 26 vorgesehen ist, wird auch hier durch das Eingreifen des Stützzapfens 21 in die Stützbohrung 19 eine zusätzliche radiale Abstützung in größerem Abstand a3 von dem einzigen Lager 26 und damit eine gute Abstützung der angetriebenen Welle 28 erreicht. Hierdurch wird in Richtung der Achse A des Grundhalters 1 eine relativ kurze axiale Baulänge des Werkzeugkopfes 3 bewirkt.

Bei dem in Figur 2 dargestellten Winkel-Werkzeugkopf trägt die angetriebene Welle ein Kegelrad 33, mit welchem sie über das Kegelrad 34 die Radialspindel 35 antreibt. Diese trägt an ihrem freien Ende die Werkzeugaufnahme 31. Anstelle einer einzigen Radialspindel 35 können auch mehrere Radialspindeln vorgesehen sein, ebenso wie an einem Werkzeugkopf von der angetriebenen Welle auch mehrere axial gerichtete Spindeln mit Werkzeugaufnahmen vorgesehen sein können.

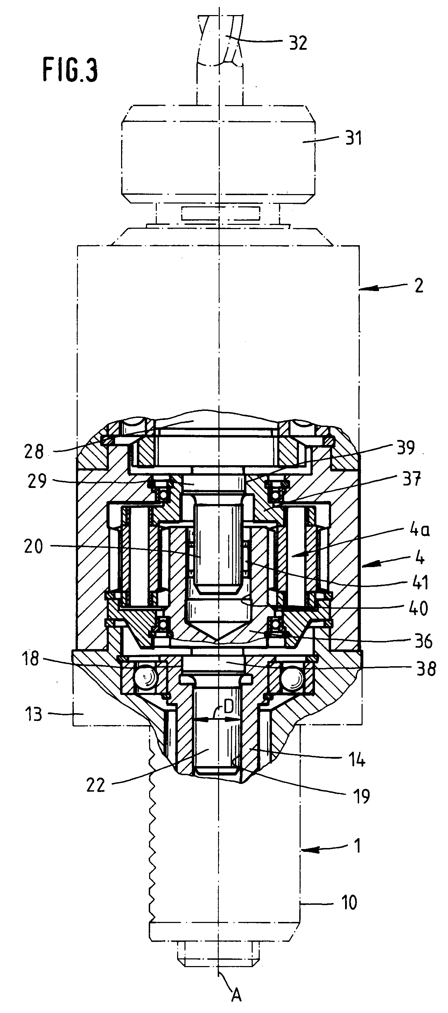

Bei dem in Figur 3 dargestellten Ausführungsbeispiel ist zwischen dem Grundhalter 1 und dem Werkzeugkopf 2 ein Zwischenteil 4 angeordnet, welches ein Untersetzungsgetriebe 4a in Form eines Planetenradgetriebes aufweist. Das Zwischenteil 4 weist eine aus zwei Wellenteilen 36, 37 bestehende Zwischenwelle auf. Das Wellenteil 36 ist eingangsseitig mit dem als Außen-Polygonprofil ausgebildeten Kupplungsteil 38 versehen, an welches sich der frei vorstehende Stützzapfen 22 anschließt. Das andere Wellenteil 37 weist ein als Innen-Polygonprofil ausgebildetes Kupplungsteil 39 auf. Die Kupplungsteile 38, 39 entsprechen in ihrer Ausgestaltung und Größe den Kupplungsteilen 29 und 18 der in Figur 1 und 2 dargestellten Ausführungsbeispiele. Das Zwischenwellenteil 36 weist ferner eine Stützbohrung 40 auf. Da sich jedoch bei diesem Untersetzungsgetriebe 4a die Zwischenwellenteile 36, 37 mit unterschiedlichen Drehzahlen drehen, ist zwischen der Stützbohrung 40 und dem jeweils in diese Stützbohrung eingreifenden Stützzapfen, z.B. dem Stützzapfen 20 des Werkzeugkopfes 2, ein Nadellager 41 vorgesehen. Auch hier erfolgt eine zusätzlich radiale Abstützung der angetriebenen Welle 28 des Werkzeugkopfes 2 durch den in die Stützbohrung 50 unter Zwischenschaltung des Nadellagers 41 eingreifenden Stützzapfen 20. Außerdem ist auch das Zwischenwellenteil 36 durch seinen in die Stützbohrung 19 eingreifenden Stützzapfen 22 zusätzlich radial abgestützt.

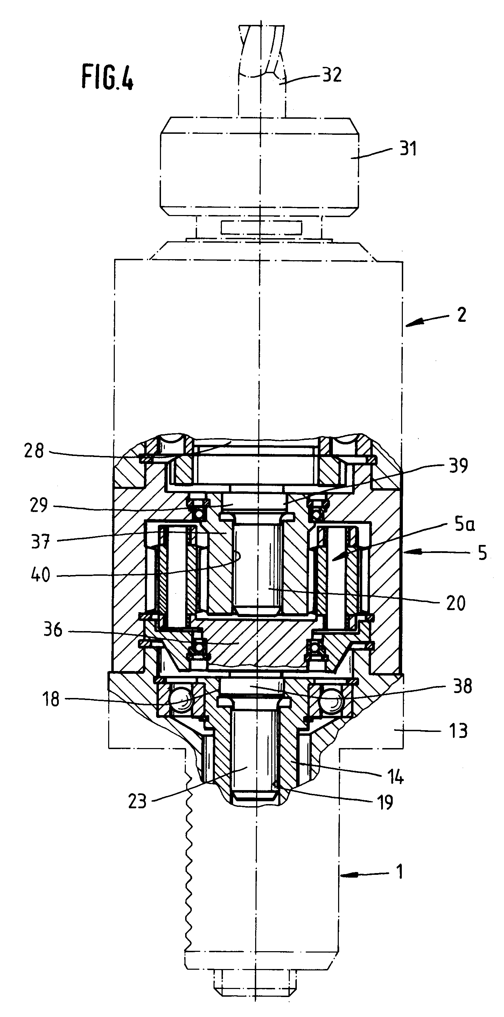

Bei dem in Figur 4 dargestellten Ausführungsbeispiel weist das Zwischenteil 5 ein als Planetenradgetriebe ausgebildetes Übersetzungsgetriebe 5a auf. Teile gleicher Funktion sind auch hier mit den gleichen Bezugszeichen bezeichnet, wie sie bei der Beschreibung des in Figur 3 dargestellten Ausführungsbeispieles verwendet wurden. Bei dem in Figur 4 dargestellten Ausführungsbeispiel drehen sich zwar die Zwischenwellenteile 36, 37 ebenfalls mit unterschiedlichen Drehzahlen, jedoch kann hier die Stützbohrung 40 in dem ausgangsseitigen Zwischenwellenteil 37 angeordnet werden, welches sich wegen der ineinandergreifenden Kupplungsteile 29, 39 synchron mit dem Stützzapfen 20 dreht. Infolgedessen kann hier ein Nadellager entfallen.

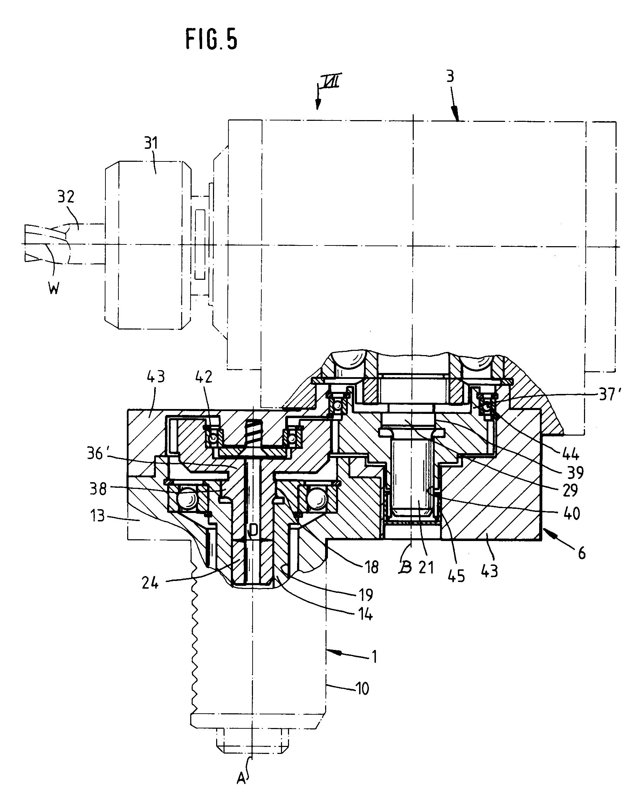

Bei dem in Figur 5 dargestellten Ausführungsbeispiel ist das Zwischenteil 6 als sogenanntes Versatzgetriebe ausgebildet, bei dem die Zwischenwellenteile 36', 37' nicht koaxial zueinander, sondern achsparallel zueinander angeordnet sind. Am eingangsseitigen Zwischenwellenteil 36' ist der Stützzapfen 24 vorgesehen, welcher in die Stützbohrung 19 des Grundhalters passend eingreift. Hierdurch erfolgt eine radiale Abstützung des Zwischenwellenteiles 36', so daß dieses nur durch ein einziges Lager 42 im Gehäuse 43 abgestützt zu werden braucht. Hierdurch wird die axiale Baulänge des Zwischenteiles 6 verringert. Das ausgangsseitige Zwischenwellenteil 37' ist ebenfalls nur durch ein Lager 44 im Gehäuse 43 gelagert. In diesem Fall greift der Stützzapfen 21 nicht nur in eine Stützbohrung 40 des Zwischenwellenteiles 37' ein, sondern auch in ein Nadellager 45, welches im Gehäuse 43 vorgesehen ist. Durch dieses Nadellager 43, welches aus Platzgründen am Stützzapfen 21 angreift, wird nicht nur letzterer, sondern über den Stützzapfen 21 auch das Zwischenwellenteil 37' zusätzlich radial abgestützt.

Anhand der Figur 6 soll gezeigt werden, daß die erfindungsgemäße Ausgestaltung auch eine zentrale Kühlmittelzuführung zum Werkzeug 32 mittels eines entsprechend ausgestalteten Zwischenteiles 7 ermöglicht. In dem Gehäuse 46 dieses Zwischenteiles ist die Zwischenwelle 47 mittels des Lagers 48 drehbar gelagert. Sie trägt an ihrem eingangsseitigen Ende das Kupplungsteil 49 und den Stützzapfen 25. Die Zwischenwelle 47 ist mit einer Stützbohrung 50 versehen. In einen erweiterten Ringraum 50a dieser Stützbohrung 50 münden zwei Radialbohrungen 51. Die Zwischenwelle 47 ist von zwei in axialem Abstand voneinander angeordneten Dichtungen 52 umgeben, die zwischen Zwischenwelle 47 und Gehäuse 46 angeordnet sind. Zwischen beiden Dichtungen 52 wird ein Ringraum 53 begrenzt, in den eine im Gehäuse 46 vorgesehene, radiale Zuführbohrung 54 mündet. Vorteilhaft ist weiterhin im Gehäuse 46 ein mit der Zuführbohrung 54 verbundener, achsparalleler Zuführkanal 55 vorgesehen, welcher an der dem Anbauflansch 13 zugekehrten Stirnseite 46a des Gehäuses 46 mündet. Dieser Zuführkanal 55 fluchtet mit einem weiteren, im Anbauflansch 13 vorgesehenen Zuführkanal 56. Über die Zuführkanäle 56, 55, die Zuführbohrung 54, den Ringraum 53 und die Radialbohrungen 51 kann dem erweiterten Teil 50a der Stützbohrung Kühlschmiermittel zugeführt werden. Die antreibbare Welle 28 des Werkzeugkopfes 2 weist einen zentralen Kühlschmiermittelkanal 57 auf, der sich bis in den Stützzapfen 20 erstreckt und über Radialbohrungen 58 mit dem Raum 50a in Verbindung steht. Gegebenenfalls könnte die Kühlschmiermittelzufuhr auch dadurch erfolgen, daß die radiale Zuführbohrung 54 im Gehäuse 46 nach außen geführt ist und dort über eine lösbare Schlauchkupplung mit einem Zuführschlauch für Kühlschmiermittel verbindbar ist.

Zusätzlich oder anstelle der vorstehend beschriebenen zentralen Kühlschmiermittelzufuhr kann dem Werkzeug 32 gegebenenfalls auch das Kühlschmiermittel dezentral zugeführt werden. Zu diesem Zweck weist der Werkzeugkopf einen mit den Zuführkanälen 56 bzw. 55 fluchtenden Zuführkanal 60 auf, an welchen das Rohr 61 angeschraubt ist. Über dieses Rohr 61 kann dem Werkzeug 32 Kühlschmiermittel von außen her zugeführt werden. Gegebenenfalls kann das Rohr 61 auch entfernt und der Zuführkanal 60 durch einen Gewindestift verschlossen werden. Falls nur die dezentrale Kühlschmiermittelzufuhr von außen her erwünscht ist, dann kann das Zwischenteil 7 entfallen und der Zuführkanal 60 ist dann direkt an den Zuführkanal 56 des Anbauflansches 13 angeschlossen.

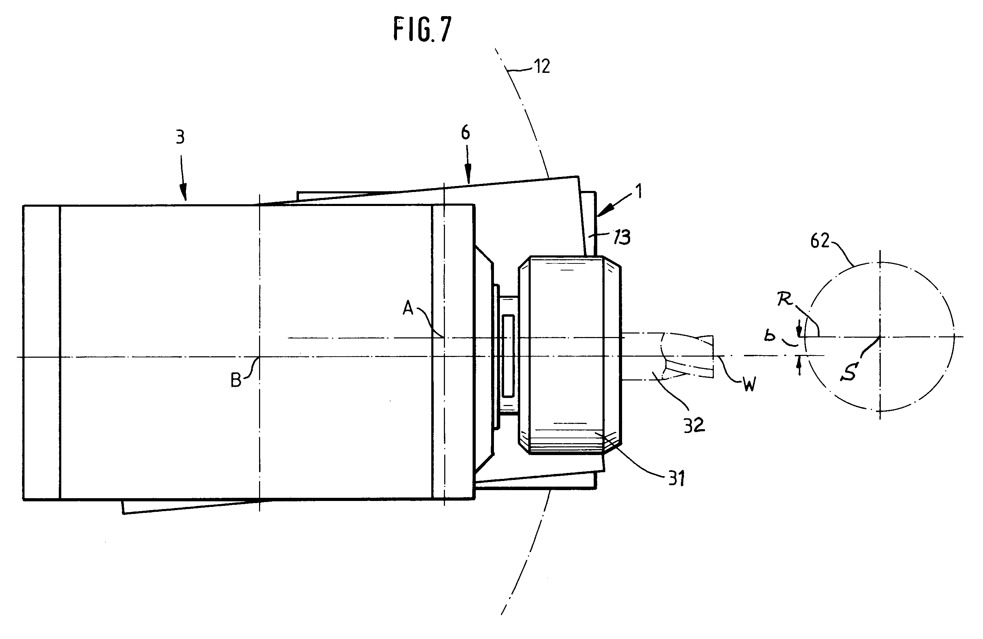

Mit einem Winkel-Werkzeugkopf 3, wie er in Figur 5 dargestellt ist, können normalerweise nur Bearbeitungen vorgenommen werden, bei denen die Werkzeugachse W exakt radial zur Werkstückachse verläuft. Es sind jedoch manchmal auch Bearbeitungen erforderlich, bei denen die Werkzeugachse W gegenüber der Werkstückachse des Werkstückes 62, wie es in Figur 7 dargestellt ist, um den Betrag b versetzt sein muß. Diese Art der Bearbeitung, die nachstehend als außermittige Bearbeitung bezeichnet wird, ist mit den bisher bekannten modularen Werkzeughaltern nicht möglich. Um auch eine derartige außermittige Bearbeitung zu ermöglichen, ist das als Versatzgetriebe ausgebildete Zwischenteil 6 gegenüber dem Anbauflansch 13 des Grundhalters 1 um dessen Achse verschwenkbar und in der eingestellten Schwenkstellung gegenüber dem Grundhalter 1 fixierbar. Außerdem ist auch der Winkel-Werkzeugkopf 3 gegenüber dem Zwischenteil 6 um eine parallel zu der Achse A des Grundteiles verlaufende Achse B verschwenkbar. Bei der Achse B handelt es sich um die Achse des in Figur 5 dargestellten Zwischenwellenteiles 37'. Auch der Winkel-Werkzeugkopf 3 ist in der eingestellten Schwenkstellung gegenüber dem Zwischenteil 6 fixierbar. Hierdurch kann das Werkzeug 32 in die in Figur 7 dargestellte Stellung gebracht werden, bei der die Werkzeugachse W nicht die Achse S des Werkstückes 62 schneidet, sondern im Abstand b parallel zu einem Radius R des Werkstückes verläuft.

**Patentansprüche**

1. Werkzeughalter mit modularem Aufbau für angetriebene Werkzeuge zur Verwendung an Drehmaschinen, mit einem Grundhalter, der einen in eine Aufnahme der Drehmaschine einsetzbaren Einspannschaft od. dgl., einen daran koaxial anschließenden Anbauflansch, sowie eine in diesem und dem Einspannschaft drehbar gelagerte Antriebswelle aufweist, mit mehreren verschiedenen, wechselweise mit dem Anbauflansch unmittelbar oder gegebenenfalls unter Zwischenschaltung mindestens eines Zwischenteiles verbindbaren Werkzeugköpfen, von denen jeder in einem Gehäuse mindestens eine drehbare Werkzeugaufnahme und eine mit dieser in Antriebsverbindung stehende, im Gehäuse drehbar gelagerte, antreibbare Welle aufweist, und mit an den jeweils einander zugekehrten Enden der Antriebswelle und der angetriebenen Welle vorgesehenen, durch axiales Ineinanderstecken drehfest miteinander kuppelbaren Kupplungsteilen, wobei in einem Gehäuse des Zwischenteiles eine ein- oder zweiteilige Zwischenwelle drehbar gelagert ist, die eingangs- und ausgangsseitig mit den vorgenannten Kupplungsteilen kuppelbare Kupplungsteile aufweist, **dadurch gekennzeichnet,** daß die angetriebene Welle (28) und die Zwischenwelle (36, 37; 36', 37'; 47) eingangsseitig an ihren jeweils dem Anbauflansch (13) zugewandten Enden jede mit einem über das zugehörige Kupplungsteil (29, 38, 49) zum jeweils benachbarten Modul hin frei hinausragenden Stützzapfen (20 - 25) gleichen Durchmessers (D) versehen sind, und daß die Antriebswelle (14) im Bereich des Anbauflansches (13) und die Zwischenwelle (36, 37; 47) an ihren dem jeweiligen Werkzeugkopf (2, 3) zugewandten Enden jede mit einer koaxialen Stützbohrung (19, 40, 50) versehen sind, in welche der Stützzapfen (20 - 25) des jeweils benachbarten Moduls (2 - 7) passend einsteckbar ist.

2. Werkzeughalter nach Anspruch 1, **dadurch gekennzeichnet,** daß die axiale Länge des Stützzapfens (20 - 25) mindestens so groß ist wie sein Durchmesser (D).

3. Werkzeughalter nach Anspruch 2, **dadurch gekennzeichnet,** daß die axiale Länge des Stützzapfens (20 - 25) etwa doppelt so groß ist wie sein Durchmesser (D).

4. Werkzeughalter nach Anspruch 1, 2 oder 3, **dadurch gekennzeichnet,** daß die Kupplungsteile (18, 29, 38, 39, 49, 59) als Polygonprofile ausgebildet sind, wobei die Antriebswelle (14) und das ausgangsseitige Wellenteil (37, 37') bzw. Ende der Zwischenwelle (36, 37; 36', 37'; 47) jeweils mit einem Innen-Polygonprofil (18, 39, 59) das eingangsseitige Ende der antreibbaren Welle (28) und das eingangsseitige Wellenteil (36, 36') bzw. Ende der Zwischenwelle (36, 37; 36', 37'; 47) jeweils mit einem Außen-Polygonprofil (29, 38, 49) versehen sind.

5. Werkzeughalter nach mindestens einem der Ansprüche 1 - 4, **dadurch gekennzeichnet,** daß das Zwischenteil (4, 5, 6) ein Getriebe ist.

6. Werkzeughalter nach Anspruch 5, **dadurch gekennzeichnet,** daß bei unterschiedlicher Drehzahl eines die Stützbohrung (40) aufweisenden Zwischenwellenteiles (36) gegenüber dem in die Stützbohrung (40) einsteckbaren Stützzapfen (20) des benachbarten Moduls (2) in der Stützbohrung (40) ein den Stützzapfen (20) abstützendes Nadellager (41) angeordnet ist. (Fig. 3)

7. Werkzeughalter nach mindestens einem der Ansprüche 1 - 4, **dadurch gekennzeichnet,** daß die antreibbare Welle (28) des Werkzeugkopfes (2) einen zentralen Kühlschmiermittelkanal (57) aufweist, der sich bis in den Stützzapfen (20) erstreckt, daß das Zwischenteil (7) als Kühlschmiermittel-Zuführung ausgebildet ist und seine Zwischenwelle (47) mindestens eine in die Stützbohrung (50) mündende Radialbohrung (51) aufweist, daß die Zwischenwelle (47) im Bereich der Radialbohrung (51) von einem durch zwei in axialem Abstand voneinander zwischen der Zwischenwelle (47) und dem Gehäuse (46) angeordnete Dichtungen (52) begrenzten Ringraum (53) umgeben ist und daß in diesen eine im Gehäuse (46) vorgesehene radiale Zuführbohrung (54) mündet.

8. Werkzeughalter nach Anspruch 7, **dadurch gekennzeichnet,** daß in dem Gehäuse (46) ein achsparalleler, mit der Zuführbohrung (54) verbundener Zuführkanal (55) vorgesehen ist, welcher an der dem Anbauflansch (13) zugekehrten Stirnseite (46a) des Gehäuses (46) mündet und mit einem im Anbauflansch (13) vorgesehenen Zuführkanal (56) fluchtet.

9. Werkzeughalter, insbesondere nach den Ansprüchen 1 und 5, **dadurch gekennzeichnet,** daß das Zwischenteil 6 ein Versatzgetriebe ist, daß mit diesem ein Winkel-Werkzeugkopf (3) verbindbar ist, bei dem die Werkzeugachse (W) rechtwinklig zur Achse (A) des Grundhalters (1) angeordnet ist und daß sowohl das Versatzgetriebe (6) gegenüber dem Anbauflansch (13) des Grundhalters (1) um dessen Achse, als auch der Winkel-Werkzeugkopf (3) gegenüber dem Zwischenteil (6) um eine parallel zu der Achse des Grundteiles verlaufende Achse (B) eines Zwischenwellenteiles (37') verschwenkbar und in der eingestellten Schwenkstellung gegenüber dem benachbarten Modul fixierbar sind.

# FIG.1

# FIG.2

FIG.3

FIG.4

## FIG.5

**FIG.6**

FIG.7

## EINSCHLÄGIGE DOKUMENTE

EP 91112553.2

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| A | DE - A1 - 3 202 042 (G. BOLEY GMBH & CO) * Fig. 1-5 * | 1,5 | B 23 B 31/02 B 23 B 29/12 |
| A | DE - A1 - 3 904 281 (SAUTER FEINMECHANIK GMBH) * Gesamt * | 1 | |
| A | DE - A1 - 3 130 484 (BENZ GMBH) * Fig. 1-5b * | 1 | |
| A | DE - A1 - 3 341 958 (FORGACSOLOSZERSZAMIPARI VALLALAT) * Fig. 1-3 * | 1 | |
| A | DE - A1 - 2 831 660 (ABH GRANLUND & CO.) * Fig. 1-7 * | 1 | |

RECHERCHIERTE SACHGEBIETE (Int. Cl.⁵)

B 23 B 31/00
B 23 B 29/00
B 23 B 39/00
B 23 B 51/00
B 23 Q  3/00

Der vorliegende Recherchenbericht wurde für alle Patentansprüche erstellt.

| Recherchenort | Abschlußdatum der Recherche | Prüfer |
|---|---|---|
| WIEN | 04-10-1991 | BRÄUER |